(19) Europäisches Patentamt
European Patent Office
Office européen des brevets

(11) **EP 1 240 074 B1**

(12) **EUROPEAN PATENT SPECIFICATION**

(45) Date of publication and mention
of the grant of the patent:
**26.09.2007 Bulletin 2007/39**

(21) Application number: **00983562.0**

(22) Date of filing: **15.12.2000**

(51) Int Cl.:
***B62M 1/16*** (2006.01)

(86) International application number:
**PCT/KR2000/001472**

(87) International publication number:
**WO 2001/044042 (21.06.2001 Gazette 2001/25)**

(54) **APPARATUS FOR CHANGING SPEED OF BICYCLES**

FAHRRADGANGSCHALTUNG

DISPOSITIF DE CHANGEMENT DE VITESSE DE BICYCLETTES

(84) Designated Contracting States:
**AT BE CH CY DE DK ES FI FR GB GR IE IT LI LU
MC NL PT SE TR**

(30) Priority: **15.12.1999 KR 9957970
11.11.2000 KR 2000066916**

(43) Date of publication of application:
**18.09.2002 Bulletin 2002/38**

(73) Proprietor: **MBI Co., Ltd.
Chungcheongbuk-do (KR)**

(72) Inventor: **YOO, Moon-Soo
Cheongju-si,
Chungcheongbuk-do 361-240 (KR)**

(74) Representative: **Wilson Gunn
5th Floor
Blackfriars House
The Parsonage
Manchester M3 2JA (GB)**

(56) References cited:
**GB-A- 2 249 364        JP-A- 7 010 069
US-A- 5 855 530**

**Description**

Technical Field

The present invention relates to an apparatus for changing speed of bicycles, more particularly, as a transmission for bicycles and something using sprockets and chains, to an apparatus for changing speed of bicycles that changes speed of bicycles using inner gears inside a rear wheel hub and controlling the inner gears with controllers mounted on a hub shaft, so that the bicycle has good appearance, the manipulation of changing speed is convenient, the effect of the manipulation takes place immediately after an operation, little noises occur when changing the speed of bicycles, and the steps of speed are easily extensible.

Background Art

In general, an apparatus for changing speed (or a transmission) is installed on bicycles, and in some other cases, the transmission is installed on wheelchairs and toy cars using pedals.

As a conventional transmission for bicycles, sprockets having diverse diameters are mounted on the side of middle frame and rear wheel, and a chain which connects the front and rear sprockets. So the speed is changed by changing the coupling of the sprockets.

But the conventional transmission for bicycles has a few drawbacks in that it is too bulky because many large sprockets are mounted, moreover, noises and impacts take place when changing the speed of bicycles.

As a counterproposal to the drawbacks, there is an inner gear-type transmission that is installed in a rear wheel hub. The inner gear-type transmission is such a device that small gears and a controlling means are disposed in hub shell, so that the speed of bicycles is changed by changing the gear tooth's ratio thereof.

As an example of the inner gear-type transmission, an inner gear-type transmission hub for bicycles is disclosed by Japanese laid open patent publication No. Hei7-10069.

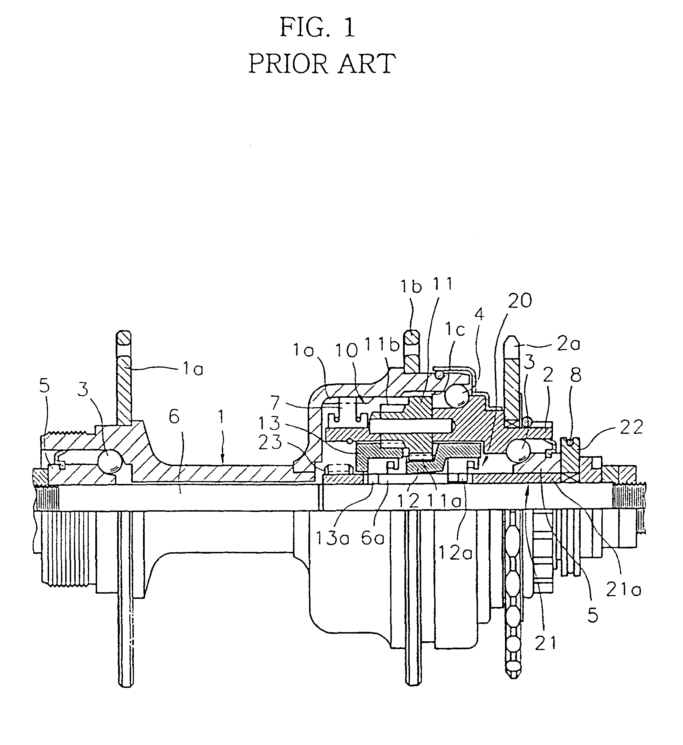

The inner gear-type transmission is, as shown in FIG. 1, comprising a speed changing portion 10 which is composed of a hub shaft 6, a driving body 2, a hub I freely rotatable, at least two sun gears 12, 13 engaging with at least two teeth portions 11a, 11b, and a speed-change controlling portion 20 controlling the speed changing portion 10 by transforming the rotational state of a plurality of sun gears 12, 13, which is composed of a one-directional driving means 7 that is installed between the driving body 2 and the hub 1, enables the hub 1 to rotate precedently over the driving body 2, a ring-gear portion 1c fixed to the hub 1 engaging with planetary gears 11.

So the transmission can change the speed of bicycles to three states, that is, a low speed state that the driving force of the driving body 2 is transferred to the hub I via the one-directional driving means 7 by controlling of the speed-change controlling portion 20, and at least two high speed-states that the driving force of the driving body 2 is transferred the ring-gear portion 1c via the planetary gears 11 with speed increase.

Namely, when it is in low speed state, the driving force of the driving body 2 is transferred directly to the hub 1 by the one-directional driving means 7.

But when a rider controls the speed-change controlling portion 20, one of the sun gears 12, 13 is fixed selectively. The driving body 2 is rotating, in this state, the ring-gear portion 1c is rotating with planetary gears 11 being engaged with the selectively fixed sun gear.

In this case, the speed is controlled by the tooth's ratio among the fixed sun gear, the planetary gears 11, and ring-gear portion 1c. Because the fixed sun gear has much more teeth than the planetary gears 11, the speed of the planetary gears 11 revolving around the fixed sun gear exceeds the speed of one-directional driving means 7, therefore, the high speed state is possible.

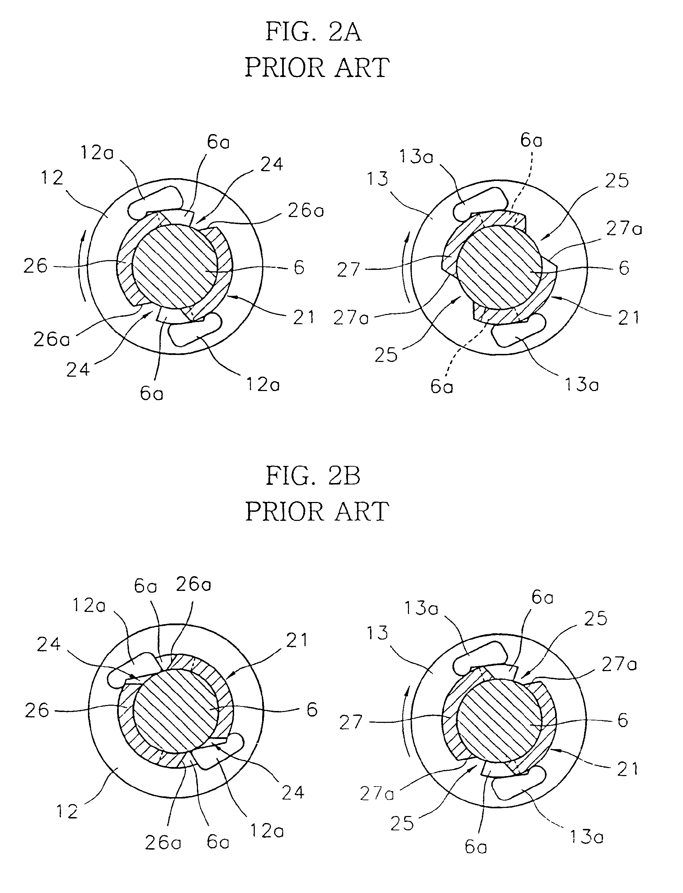

The operation of the speed-change controlling portion 20 is, as shown in FIGs. 2A to 2C. operated by pawls 12a, 13a mounted on the side of the sun gears 12, 13, a protrusion for fixing gears 6a, and a controlling sleeve 21. That is, each step of changing speed is operated by fixing the sun gear using the pawls 12a, 13a with being fixed to the controlling sleeve 21 or by releasing the sun gears from the pawls 12a, 13a.

In a low speed state, as shown in FIG. 2A, two pawls 12a, 13a are released from the controlling sleeve 21 by the protrusion for fixing gears 6a.

But in the first high speed state, as shown in FIG. 2B, because one pawl 12a is fastening the controlling sleeve 21, one sun gear 13 is rotatable. So the larger diameter portion of the planetary gears 11 is engaging with the fixed sun gear 12.

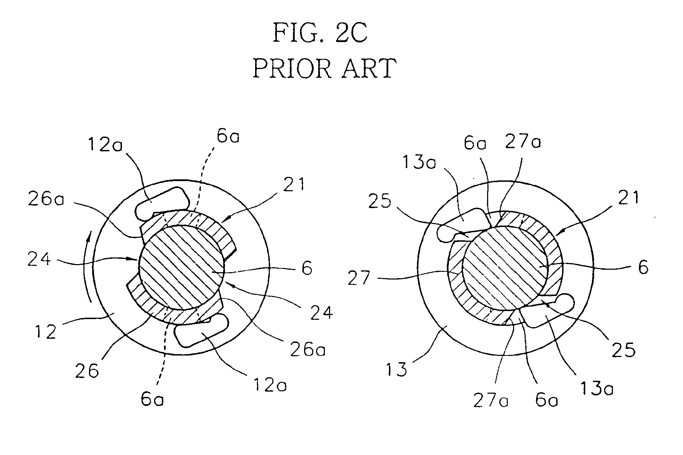

In the other hand, when the other pawl 13a is fastening the controlling sleeve 21, the other sun gear 12 is rotatable, so the smaller diameter portion of the planetary gears 11 is engaging with the fixed sun gear 13 as shown in FIG. 2C. That is to say, it is the second high speed state.

However, in such an above speed controlling type, because two pawls 12a, 13a are installed on the opposite side to each other, there is a drawback. That is, when a rider operates a lever in order to change the speed of a bicycle, the effect of operation is delayed until one of the pawls 12a, 13a is in effect. To the most, the effect of the operation takes place after the wheel makes a half revolution.

While the above drawback could be settled a little by comprising more pawls, it is needed that the shape of the controlling sleeve 21 must be changed. But because it is also needed that the shape of the protrusion for fixing gears 6a is to be changed, it is confined to increase the number of pawls.

Even when the pawls are not in operation, friction always takes place between the pawls 12a, 13a and the controlling sleeve 21. And the friction also causes noises and abrasion, which is also a weak point.

Moreover, in case of comprising more steps of speed change by comprising more planetary gears, above drawbacks become more serious.

## Disclosure of the Invention

It is an object of the present invention to provide an apparatus for changing the speed of bicycles, which changes speed of bicycles using inner gears inside a rear wheel hub and controlling the inner gears with controllers mounted on a hub shaft, so that the bicycle has good appearance, the manipulation of changing speed is convenient, the effect of the manipulation takes place immediately after an operation, little noises occur when changing the speed of bicycles, and the steps of speed are easily extensible.

According to the first aspect of the above object, there is provided an apparatus for changing the speed of bicycles, the apparatus comprising: a driven sprocket for receiving the driving force of a driving sprocket; a speed controlling portion, comprising: a carrier fixed to one side of the driven sprocket, a plurality of planetary gears on said carrier, each of said planetary gears having at least a first tooth portion and a second tooth portion; at least two sun gears, each having ratchet-teeth along its inner circumference, one of said sun gears engaging with said first tooth portion of each of said plurality gears and a second of said sun gears engaging with said second tooth portion on each of said planetary gears; and a ring engaging with the planetary gears; an output portion, comprising: a hub shell for transferring the driving force to a ear wheel of a bicycle by means of the carrier and the ring gear; and a clutch means mounted between the carrier and the hub shell, and the ring gear and the hub shell to selectively transmit the driving force; and a speed-changing controlling portion, comprising: a hub shaft having a pawl-positioning portion; at least two sets of pawls operative to engage with the ratchet-teeth of the at least two sun gears; a pawl-controlling ring extending around the hub shaft, operative to control the position of the at least two sets of pawls; a transforming disk having a groove along its outer circumference, and a hooking portion on said outer circumference, the transforming disk being operative to transform the position of the pawl-controlling ring via a mediating portion; a spring for restoring the position of the transforming disk to its original position; and a spacing portion enabling the transforming disk to rotate freely relative to the hub shell.

In order that the invention may be more clearly understood embodiments thereof will now be described by way of example with reference to the accompanying drawings.

## Brief Description of the Drawings

FIG. 1 is a partial section view showing a transmission hub for bicycles of prior art;
FIGs. 2A to 2C are schematic views of a speed-change controlling portion in each speed step of a transmission hub for bicycles of prior art;
FIG. 3 is a section view of the present invention;
FIG. 4 is a section view cut along A - AD line of the FIG. 3;
FIG. 5 is a section view of the speed-change controlling portion of the present invention;
FIG. 6 is a perspective view of the speed-change controlling portion of the present invention;
FIG. 7 is an exploded perspective view of the speed-change controlling portion of the present invention;
FIG. 8 is a section view of the present invention according to another embodiment;
FIG. 9A is a schematic view of the speed-change controlling portion of the present invention in low speed state;
FIG. 9B is a schematic view of the speed-change controlling portion of the present invention in mid speed state;
FIG. 9C is a schematic view of the speed-change controlling portion of the present invention in high speed state;
FIG. 10 is a section view of the present invention according to the third embodiment;
FIG. 11 is a section view of the present invention according to the fourth embodiment.

## Best mode for carrying out the Invention

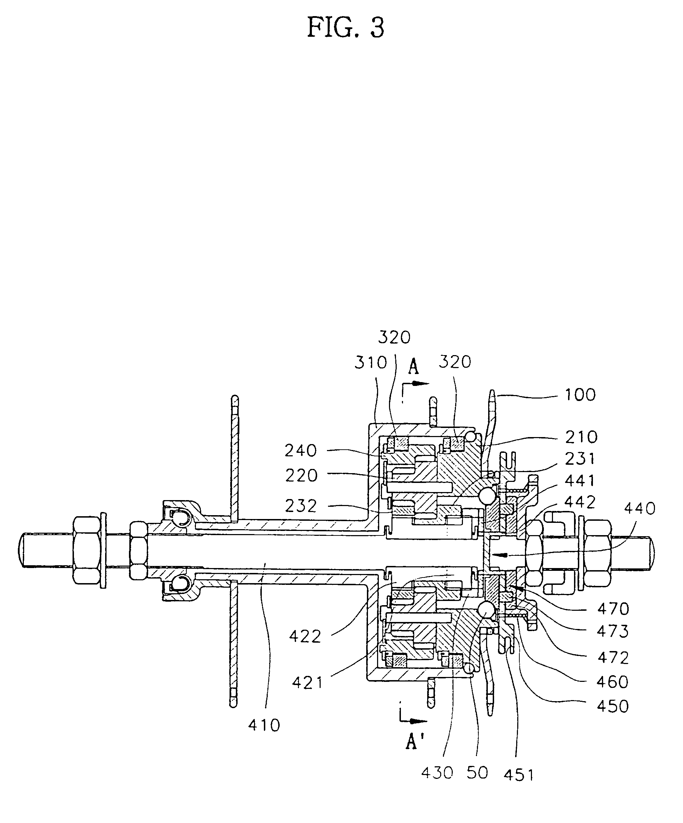

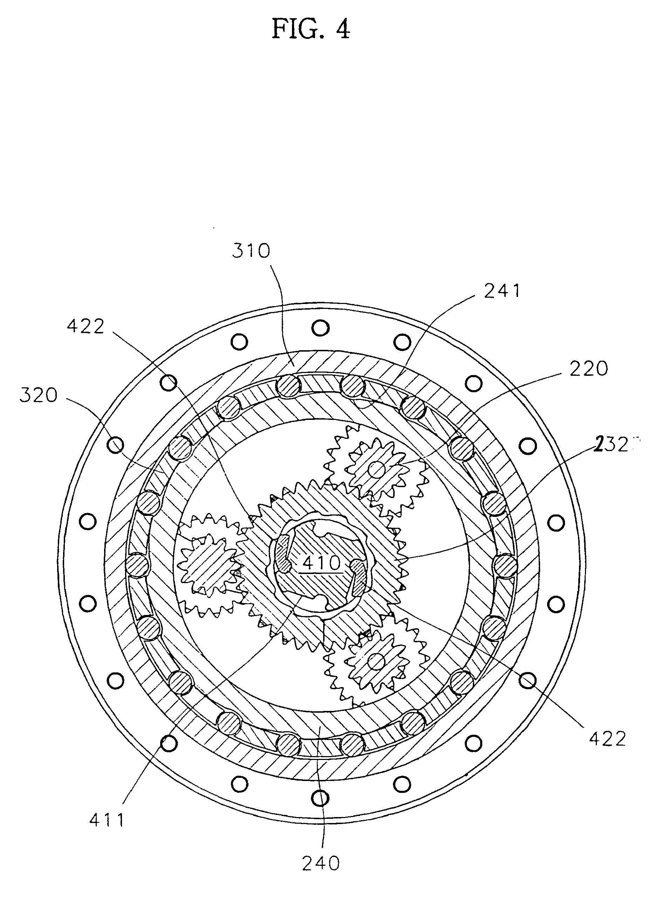

As shown in FIGs. 3 and 4, the present invention of an apparatus for changing speed of bicycles comprises, largely, a driven sprocket 100 receiving the driving force of a driving sprocket (not shown), a speed controlling portion, an output portion, and a speed-change controlling portion.

Said speed controlling portion is comprising a carrier 210 that is fixed to one side of the driven sprocket 100 and a plurality of planetary gears 220 is installed, at least two sun gears 231, 232 that is engaging each step of the planetary gears 220 and ratchet-teeth 231a, 232a are formed along inner circumference, and a ring gear 240 that is engaging with the other side of the planetary gears 220.

And the output portion is comprising a hub shell 310 transferring the driving force to a rear wheel by means of the carrier 210 and the ring gear 240, and a clutch means 320 that is mediating the driving force selectively with being mounted between the carrier 210 and the hub shell 310, and the ring gear 240 and the hub shell 310.

The speed-change controlling portion is comprising a hub shaft 410 having a pawl-positioning portion 411, at least two set of pawls 421, 422 which are engaging or releasing with the ratchet-teeth 231a, 232a of the at least two sun gears 231, 232, a pawl-controlling ring 430 that is controlling the position of the at least two set of pawls 421, 422, a transforming disk 450 having a groove 451 along outer circumference and a hooking portion 452 is formed on a certain position along the outer circumference in order to transforming the position of the pawl-controlling ring 430 via a mediating portion 440, a spring 460 that is for restoring position of the transforming disk 450 to original position, and a spacing portion 470 enabling the transforming disk 450 to rotate freely.

In this embodiment, the clutching means 320 is comprising a clutch ring in which a group of pins is formed and a sloping portion 241 is formed on the outer surface of the carrier 210 and the ring gear 240. So the carrier 210 (or the ring gear 240) and the hub shell 310 rotate, as like a one body with being fixed by the relative displacement of the clutch ring.

But according to circumstances, a ratchet-teeth and pawls can replace the clutch ring and the sloping portion 241.

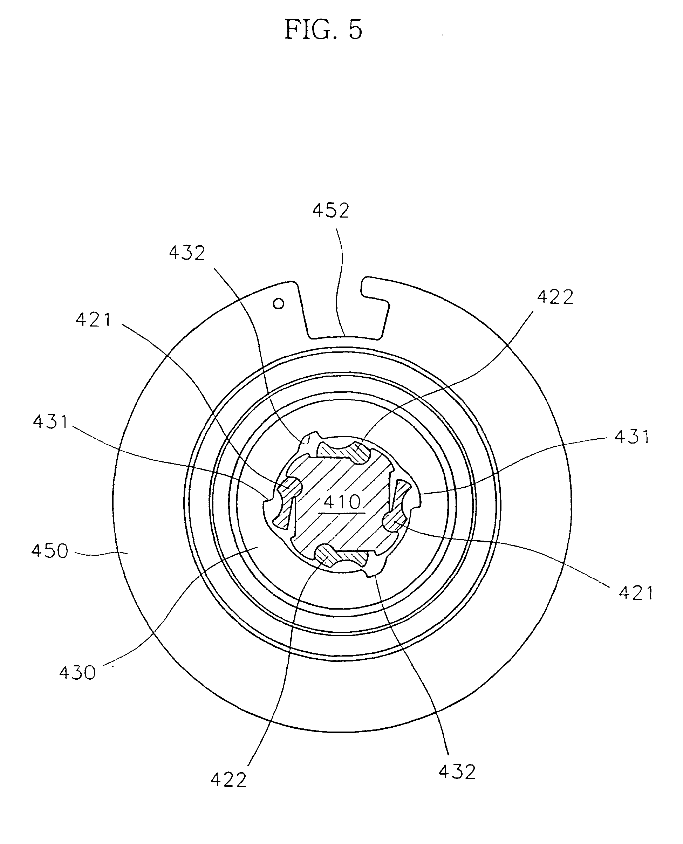

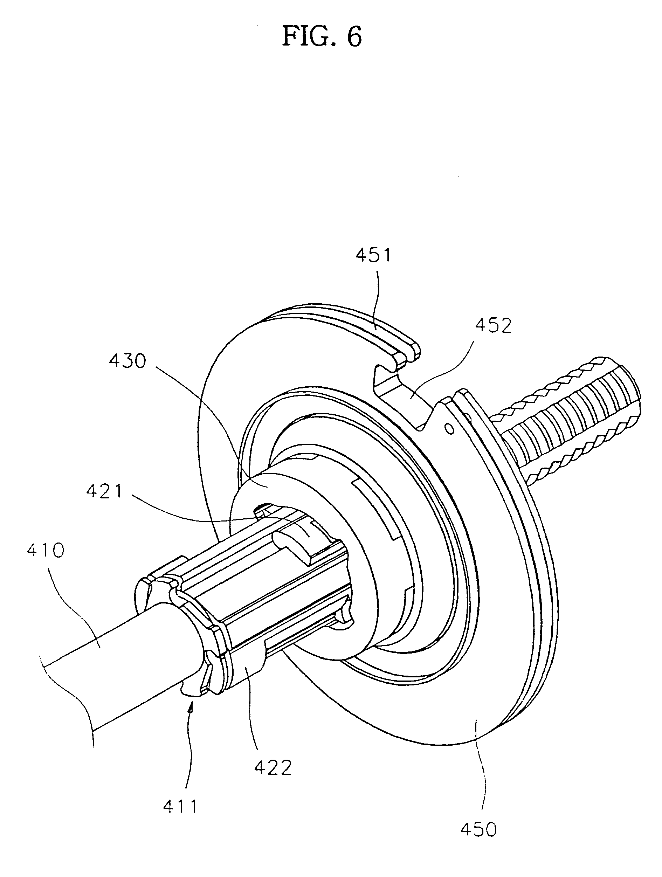

As shown in FIGs. 5 and 6, on the inner surface of the pawl-controlling ring 430, grooves are formed symmetrically with respect to the center point in order to control the position of the pawls 421, 422.

The grooves are consisted of a couple of a sloping groove 431 and a couple of an angular groove 432, and the sloping groove 431 and the angular groove 432 are formed alternatively on the inner surface of the pawl-controlling ring 430.

While the grooves are not formed as the same interval, the pawls 421, 422 are mounted in the pawl-positioning portion 411 with the same interval, so that only one set of pawls is controlled selectively and smoothly.

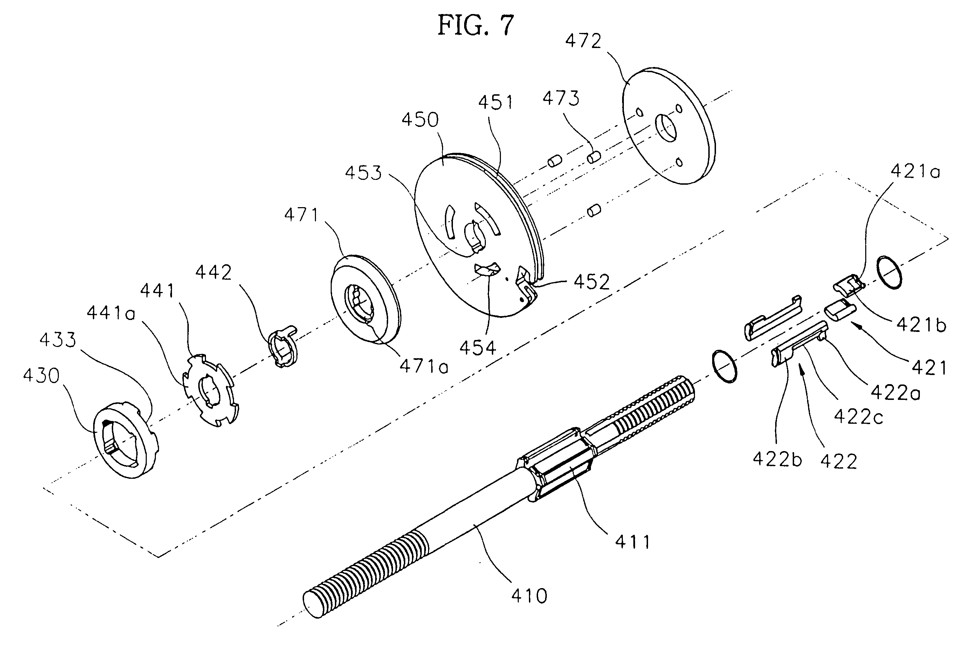

And the pawls 421, 422 are, as shown in FIG. 7, composed of a sag portion 421a, 422a positioning inside of the pawl-controlling ring 430 and a stopper portion 421b, 422b that is engaging or releasing with the ratchet-teeth 231a, 232a which are formed along inner circumference of the sun gear 231, 232.

The pawl 422, which is positioning relatively far from the pawl-controlling ring 430, is further comprising an extended portion 422c that is thinner than pawl body, so that it prevents the pawl 422 from engaging with other elements.

From now on, the pawl 421 denotes a first pawl that is engaging with the sun gear 231 (also, denotes a first sun gear) which is near to the pawl-controlling ring 430, and the pawl 422 denotes a second pawl that is engaging with the sun gear 232 (also, a second sun gear), for convenience.

The mediating portion 440 is comprising a splined groove 433 that is formed on one side of the pawl-controlling ring 430, a connecting portion 441 that is engaging with the splined groove 433 and a coupling groove 441a formed therein, and a fork ring 442 that is installed in the coupling groove 441a mediating the rotational force with being engaging with a splined portion 453 formed in the transforming disk 450.

Also, the spacing portion 470 is comprising a sustaining portion 471 sustaining a bearing which is mounted between the carrier 210 and the sustaining portion 471, a fixed disk 472 that is fixed to the hub shaft 410, and a plurality of spacer pin 473 that is fixed to the fixed disk 472 and contacting with the sustaining portion 471 through an arc groove 454 formed in the transforming disk 450.

And the sustaining portion 471 is rotatable and a through hole 471a is formed therein, in order not to hinder the rotation of the mediating portion 440.

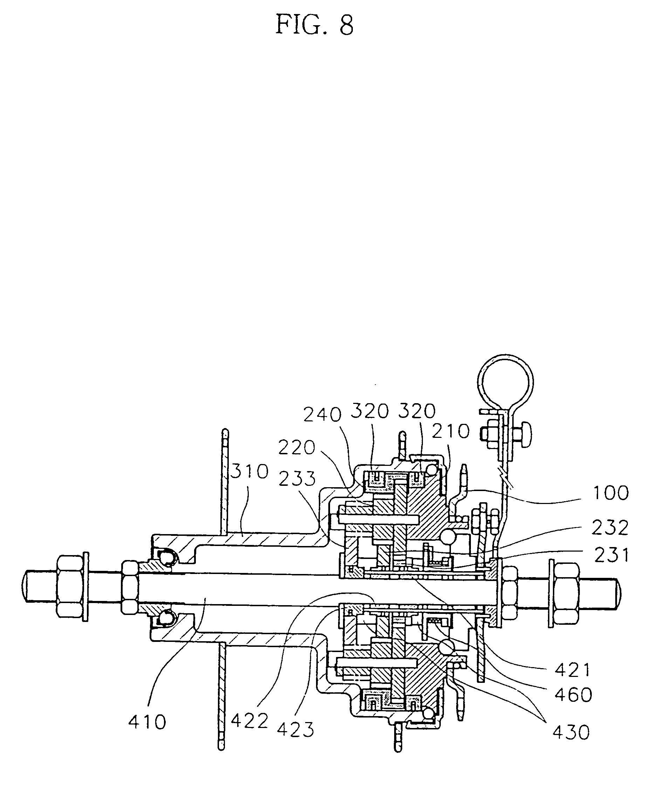

FIG. 8 is showing a section view of the present invention according to another embodiment, that is, the apparatus is comprising the planetary gears 220 having three steps, three sun gears 231, 232, 233 which are engaging with each step of the planetary gears 220, and an expanded speed-change controlling portion for controlling the state of speed to four states.

That is to say, in case of comprising more than two set of pawls, a plurality of the pawl-controlling ring is installed between each set of pawls.

But other elements are the same as previous embodiment otherwise the shapes are changed.

As described above, according to the present invention, the extension of the speed step is possible, moreover, because actual controlling of speed steps takes place in the part of the pawl-controlling portion, there are little limits to increase the speed steps.

Therefore, more than four steps of speed change are also possible.

The operation and effect of the apparatus for changing speed of bicycles, having the above structure, according to the present invention are to be described as follows.

Hereinafter, speed steps, namely, low speed state, mid speed state, and high speed state will be described with reference to the first embodiment of the present invention shown by the FIGs. 3 to 7 and FIGs. 9A to 9C.

1. Low speed state

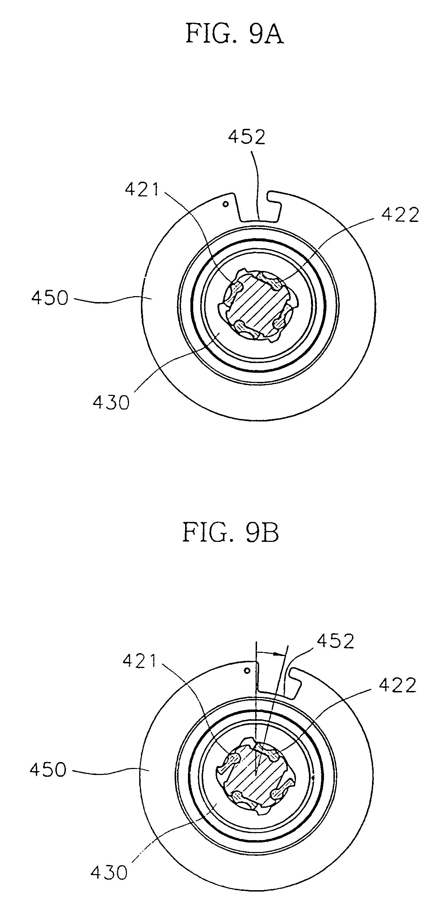

In low speed state, as shown in FIG. 9A, both the first and second pawls 421, 422 are not in the grooves 431, 432 of the pawl-controlling ring 430, that is, not engaging with the first and second sun gears 231, 232.

When the driven sprocket 100 rotates by pedaling a bicycle, the carrier 210 that is engaging with the driven sprocket 100 also rotates. Then the driving force of the carrier 210 is transferred to the hub shell 310 via the clutch means 320.

In this case, while the planetary gears 220, which is engaging with the sun gears 231, 232, rotate with the carrier 210, the planetary gears 220 are idling because the sun gears 231, 232 are in free state.

2. Mid speed state

In mid speed state, the speed-change controlling portion is disposed as shown in FIG. 9B, that is, when a rider operates a lever (not shown), the transforming disk 450 rotates a certain degree with being connected with the lever by connection means, such as a wire.

When the transforming disk 450 rotates a certain degree, the fork ring 442, which is connected in the splined portion 453 of the transforming disk 450, rotates, and the pawl-controlling ring 430 also rotates.

So the first pawl 421 locates to the sloping groove 431 and protrudes outward. As a result, the first pawl 421 is engaging the ratchet-teeth 231a of the first sun gear 231.

In this time, the second pawl 422 is protruding but not wholly, which is preferable for being sensitive to the next movement of the pawl-controlling ring 430, so that it also causes little noise.

In above described mid speed state, when the driven sprocket 100 rotates by pedaling a bicycle, the carrier 210, which is engaging with the driven sprocket 100, also rotates. Then, the planetary gears 220 also rotates, but in this case, because the teeth portion of a large diameter (simply, a first step) of the planetary gears 220 is engaging with the fixed first sun gear 231 by the first pawl 421, the planetary gears 220 rotate faster than the carrier 210.

And the speed ratio (calculated by the number of gear teeth) of the mid speed is as follows in case that the rotational speed of the carrier 210 is unity:

$$\text{speed ratio} = 1 + \frac{\text{first step of planetary gears}}{\text{ring gear}} \times \frac{\text{first sun gear}}{\text{first step of planetary gears}}$$
$$= 1 + \frac{\text{first sun gear}}{\text{ring gear}}$$

In this embodiment, the increase of speed is about one and a half times of the low speed state.

As a result, the rotational speed of the ring gear 240 by the rotation of the planetary gears 220 exceeds the speed of the carrier 210, and the clutch means 320 makes only a faster part to transfer the rotation to the hub shell 310.

3. High speed state

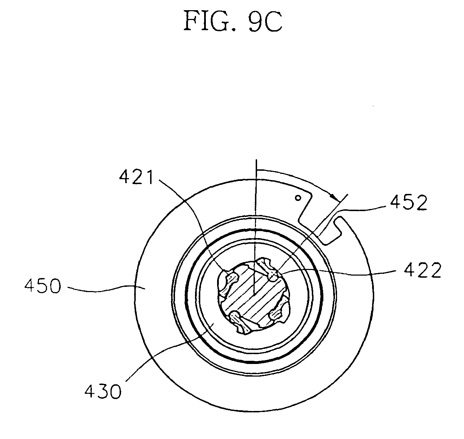

In the above mid speed state, when a rider operates a lever, the transforming disk 450 rotates, as shown in FIG. 9C, that is high speed state.

When the transforming disk 450 rotates a certain degree, as the same as the mid speed state, the fork ring 442, which is connected in the splined portion 453 of the transforming disk 450, rotates, and the pawl-controlling ring 430 also rotates more.

So the first pawl 421 moves toward inner position of the pawl-positioning portion 411 of the hub shaft 410, and the second pawl 422 is located to the angular groove 432 and protruding outward. As a result, the second pawl 422 engages with the ratchet-teeth 232a of the second sun gear 232.

In above described high speed state, when the driven sprocket 100 rotates by pedaling a bicycle, the carrier 210 that is engaging with the driven sprocket 100 also rotates. Then the planetary gears 220 also rotate, but in this case, because the teeth portion of a small diameter (simply, a second step) of the planetary gears 220 is engaging with the fixed second sun gear 232 by the second pawl 422, the planetary gears 220 rotate faster than the carrier 210, similar to the mid speed state.

And the speed ratio (calculated by the number of gear teeth) of the high speed is as follows in case that the rotational speed of the carrier 210 is unity:

$$\text{speed ratio} = 1 + \frac{\text{first step of planetary gears}}{\text{ring gear}} \times \frac{\text{second sun gear}}{\text{second step of planetary gears}}$$

In this embodiment, the increase of speed is about two times of the low speed state.

As a result, similar to the mid speed state, the rotational speed of the ring gear 240 by the rotation of the planetary gears 220 exceeds the speed of the carrier 210, and the clutch means 320 makes only a faster part to transfer the rotation to the hub shell 310.

According to the second embodiment, as described above, three sets of pawls 421, 422, 423 are provided, so higher speed states including the low, mid, and high speed state is possible.

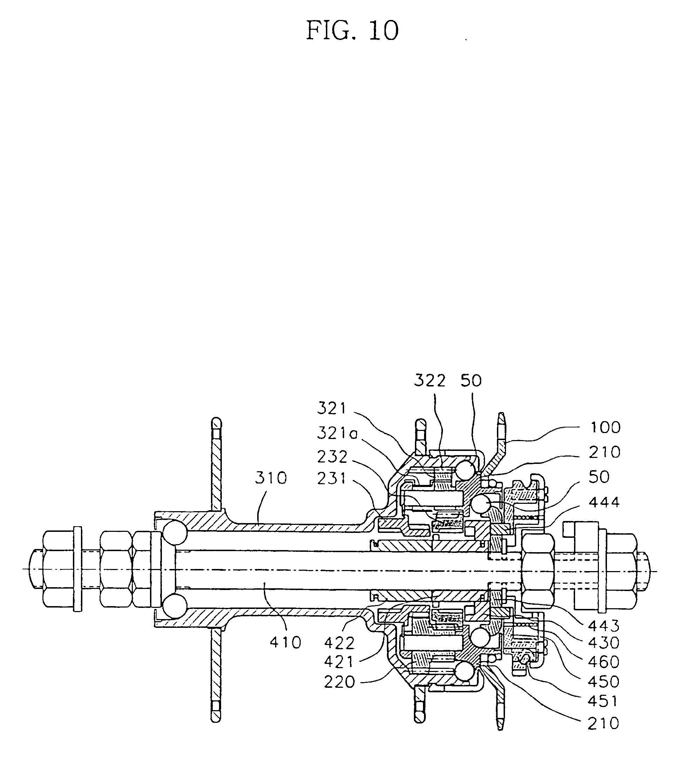

FIG. 10 is showing a section view of the present invention according to the third embodiment. The entire construction of this embodiment is about the same as the previous embodiment.

But the direction of the installation of the planetary gears 220 is opposite to the previous embodiment. And a first pawl 321 installed in the space set by the change of the direction of the planetary gears 220 and a ring gear portion 322 formed inner circumference of the hub shell 310 are used as the clutch means (320 in FIGs. 3 and 8).

And a pin 444 fixed on the one side of the pawl-controlling ring 430 is used, and the pin 444 is connected to the transforming disk 450 through a disk 443 installed between the pawl-controlling ring 430 and the transforming disk 450. (Also, the disk 443 supports the bearing 50 as shown in FIG. 10.)

The first pawl 321 engages with the ring gear portion 322 by the operation of a spring 321a mounted on a shaft of the planetary gears 220.

Therefore, the rotational force of the driven sprocket 100 is transferred to the hub shell 310 with engagement of the first pawl 321 and the ring gear portion 322, regardless of the speed states.

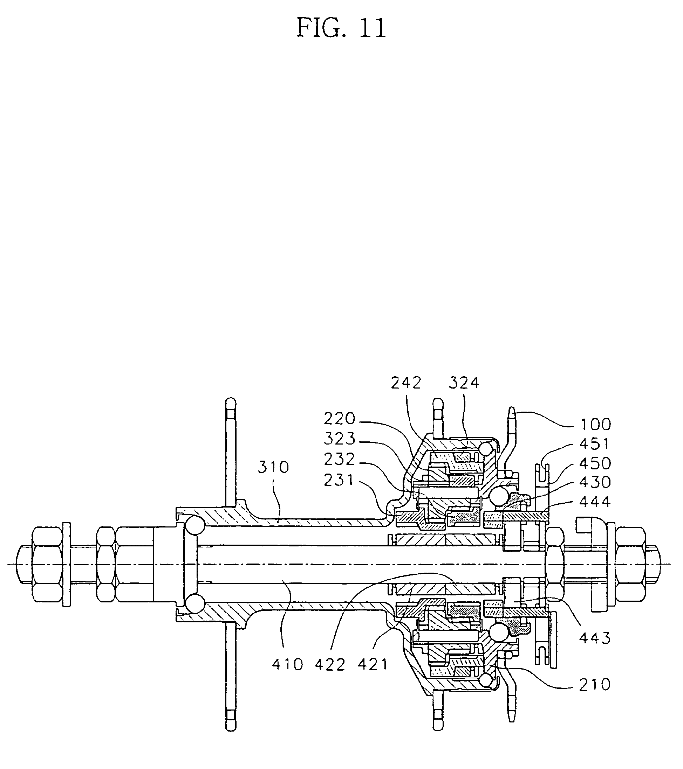

FIG. 11 is showing a section view of the present invention according to the fourth embodiment. In this embodiment, the construction is similar to the third embodiment in that, the direction of the installation of the planetary gears 220 is opposite to the previous embodiment, and a second pawl 323 installed in the space set by the change of the direction of the planetary gears 220 is used as the clutch means 320.

And a ring gear 242 engaged with the planetary gears 220 and the second pawl 323 at the same time are installed outside of the second pawl 323, and a third pawl 324 is installed between the ring gear 242 and the hub shell 310.

Other elements are the same as the third embodiment.

Therefore, in low speed state, the rotational force of the driven sprocket 100 is transferred to the hub shell 310 with the engagement of the second pawl 323 and the ring gear 242 via the third pawl 324.

And in the mid speed state and the high speed state, the rotational force of the driven sprocket 100 is transferred to the hub shell 310 with the engagement of the planetary gears 220 via the ring gear 242 and the third pawl 324.

Even in the mid speed state and the high speed state, the second pawl 323 also engages the ring gear 242, but actual engagement does not take place because the rotation of the planetary gear 220 is faster than the driven sprocket 100.

Industrial Applicability

As described above, the apparatus for changing speed of bicycles of the present invention, as a transmission for bicycles and something using sprocket and chain, changes of speed of bicycles using inner gears inside a rear wheel hub and controlling the inner gears with controllers mounted on a hub shaft, so that the bicycle has good appearance, the manipulation of changing speed is convenient, the effect of the manipulation takes place immediately, little noises occur when changing the speed of bicycles, and the steps of speed are easily extensible.

The above embodiments are described by way of example only. Many variations are possible without departing from the scope of the invention as defined by the following claims.

**Claims**

1. An apparatus for changing the speed of bicycles, the apparatus comprising:

a driven sprocket (100) for receiving the driving force of a driving sprocket;

a speed controlling portion; comprising:

a carrier (210) fixed to one side of the driven sprocket (100), a plurality of planetary gears (220) being installed on said carrier, each of said planetary gears having at least a first tooth portion and a second tooth portion;
at least two sun gears (231), (232) each having ratchet-teeth being-formed along its inner circumference, one of said sun gears engaging with said first tooth portion of each of said planetary gears and a second of said sun gears engaging with said second tooth portion on each of said planetary gears; and

a ring gear (240) engaging with the planetary gears (220); an output portion, comprising:

a hub shell (310) for transferring the driving force to a rear wheel of a bicycle by means of the carrier (210) and the ring gear (240); and

clutch means (320) mounted between the carrier (210) and the hub shell (310) and the ring gear (240) and the hub shell (310) to selectively transmit the driving force; and a speed-changing controlling portion, comprising:

a hub shaft (410) having a pawl-positioning portion (411);
at least two sets of pawls (421), (422) operative to engage with the ratchet-teeth (231a), (232a) of the at least two sun gears (231), (232);
a pawl-controlling ring (430) extending around the hub shaft (410) operative to control the position of the at least two sets of pawls (421), (422);
a transforming disk (450) having a groove along its outer circumference, and a hooking portion on said outer circumference, the transforming disk being operative to transform the position of the pawl-controlling ring (430) via a mediating portion;
a spring (460) for restoring the position of the transforming disk to its original position; and
a spacing portion (470) enabling the transforming disk to rotate freely relative to the hub shell.

2. The apparatus for changing speed of bicycles of claim 1, wherein on the inner surface of the pawl-controlling ring (430) grooves are formed symmetrically with respect to the center point.

3. The apparatus for changing speed of bicycles of claim 2, wherein the grooves of the pawl-controlling ring (430) are not formed with the same angle interval with respect to the center point.

4. The apparatus for changing speed of bicycles of claim 2, wherein the grooves of the pawl-controlling ring (430) are composed of a couple of sloping grooves and a couple of angular grooves alternatively.

5. The apparatus for changing speed of bicycles of claim 1, wherein the pawls (421), (422) are installed in the pawl-positioning portion (411) of the hub shaft (410) with the same angular interval.

6. The apparatus for changing speed of bicycles of claim 1, wherein the pawls (421), (422) comprise:

a sag portion (421a), (422a) that is positioning inside of the pawl-controlling ring (430); and
a stopper portion (421 b), (422b) that engages or releases with the ratchet-teeth (231a), (232a) formed along the inner circumference of the sun gear (231), (232).

7. The apparatus for changing speed of bicycles of claim 6, wherein the pawls (421), (422) which are positioning relatively far from the pawl-controlling ring (430) further comprise an extended portion (422a) that is thinner than the pawl body, thereby preventing the pawl (422) from engaging other elements.

8. The apparatus for changing speed of bicycles of claim 1, wherein the mediating portion (440) comprises:

a splined groove (433) formed on one side of the pawl-controlling ring (430);
a connecting portion (441) engaging with the splined groove (433) and a coupling groove (441a) formed therein; and
a fork ring (442) that is installed in the coupling groove (441a) and engaged with a splined portion (453) formed in the transforming disk (450).

9. The apparatus for changing speed of bicycles of claim 1, wherein the spacing portion (470) comprises:

   a sustaining portion (471) sustaining a bearing, which is mounted between the carrier (210) and the sustaining portion (471)'
   a fixed disk (472) that is fixed to the hub shaft (410); and
   a plurality of spacer pins (473) fixed to the fixed disk (472) and contacting with the sustaining portion (471) through an arcuate groove (454) formed in the transforming disk (450).

10. The apparatus for changing speed of bicycles of claim 9, wherein the sustaining portion (471) is rotatable and a through hole (471a) is formed therein.

11. The apparatus for changing speed of bicycles of claim 1, comprising more than two set of pawls (421), (422) with a plurality of pawl-controlling rings (430) installed between each set of pawls (421), (422).

12. The apparatus for changing speed of bicycles of claim 1, wherein the clutch means (320) comprises:

   a clutch ring having a group of pins positioned therein; and
   a sloping portion (241) at the outer circumference of the carrier (210) and the ring gear (240).

13. The apparatus for changing speed of bicycles of claim 1, wherein the clutch means comprises:

   a first pawl (321) installed in the space between the planetary gears (220); and
   a ring gear portion (322) formed inner circumference of the hub shell (320).

14. The apparatus for changing speed of bicycles of claim 1, wherein the clutch means (320) comprises:

   a second pawl (323) installed in the space between the planetary gears (220);
   a ring gear (242) engaged with the planetary gears (220) and the second pawl (323) at the same time installed outside of the second pawl (323); and
   a third pawl (324) installed between the ring gear (242) and the hub shell (310).

15. The apparatus for changing speed of bicycles of claim 1, wherein the mediating portion (440) comprises:

   a pin fixed on one side of the pawl-controlling ring, said pin being connected to the transforming disk (450) through a disk installed between the pawl-controlling ring (430) and the transforming disk (450).


**Patentansprüche**

1. Vorrichtung zur Änderung der Geschwindigkeit von Fahrrädern, umfassend:
   ein angetriebenes Kettenrad (100), welches die Antriebskraft eines antreibenden Kettenrades aufnimmt; einen Geschwindigkeitsregelabschnitt, umfassend:

   einen auf einer Seite des angetriebenen Kettenrades (100) befestigten Träger (210), eine Vielzahl von an dem Träger angebrachten Planetengetrieben (220), wobei die Planetengetriebe jeweils wenigstens einen ersten Zahnabschnitt und einen zweiten Zahnabschnitt aufweisen; wenigstens zwei Sonnenräder (231, 232), an denen jeweils Sperrzähne am Innenumfang ausgebildet sind, wobei eines der Sonnenräder mit dem ersten Zahnabschnitt jedes Planetengetriebes eingreift und ein zweites der Sonnengetriebe mit dem zweiten Zahnabschnitt an jedem der Planetengetriebe eingreift; und

   ein Hohlrad (240), welches mit den Planetengetrieben (220) eingreift; einen Ausgangsabschnitt, umfassend:

   ein Nabengehäuse (310), welches mittels des Trägers (210) und des Hohlrades (240) die Antriebskraft an das Hinterrad eines Fahrrades überträgt; und

   zwischen dem Träger (210) und dem Nabengehäuse (310) sowie dem Hohlrad (240) und dem Nabengehäuse (310) angebrachte Kupplungsmittel (320) für eine gezielte Übertragung der Antriebskraft; und einen Abschnitt zur Regelung der Geschwindigkeitsänderung, umfassend:

eine Nabenwelle (410) mit einem Sperrklinkenpositionierabschnitt (411);
wenigstens zwei Sperrklinkensätze (421), (422), welche wirksam sind, um mit den Sperrzähnen (231a), (232a) der wenigstens zwei Sonnenräder (231), (232) einzugreifen; einen um die Nabenwelle (410) verlaufenden Sperrklinkensteuerungsring (430), welcher wirksam ist, um die Stellung der wenigstens zwei Sperrklinkensätze (421), (422) zu steuern;

eine Übersetzungsscheibe (450), an deren Außenumfang entlang eine Rille vorgesehen ist und die einen Hakenabschnitt an dem Außenumfang aufweist, wobei die Übersetzungsscheibe wirksam ist, um die Stellung des Sperrklinkensteuerungsrings (430) über einen vermittelnden Abschnitt zu übersetzen:

eine Feder (460) zum Zurückführen der Stellung der Übersetzungsscheibe in ihre ursprüngliche Stellung; und einen Beabstandungsabschnitt (470), welcher eine freie Drehbewegung der Übersetzungsscheibe relativ zu dem Nabengehäuse ermöglicht.

2. Vorrichtung zur Änderung der Geschwindigkeit von Fahrrädern nach Anspruch 1, wobei auf der Innenfläche des Sperrklinkensteuerungsrings (430) Rillen symmetrisch in Bezug den Mittelpunkt ausgebildet sind.

3. Vorrichtung zur Änderung der Geschwindigkeit von Fahrrädern nach Anspruch 2, wobei die Rillen des Sperrklinkensteuerungsrings (430) nicht mit dem gleichen Winkelabstand in Bezug auf den Mittelpunkt ausgebildet sind.

4. Vorrichtung zur Änderung der Geschwindigkeit von Fahrrädern nach Anspruch 2, wobei die Rillen des Sperrklinkensteuerungsrings (430) abwechselnd aus einem Paar geneigter Rillen und einem Paar abgewinkelter Rillen bestehen.

5. Vorrichtung zur Änderung der Geschwindigkeit von Fahrrädern nach Anspruch 1, wobei die Sperrklinken (421), (422) mit dem gleichen Winkelabstand in dem Sperrklinkenpositionierabschnitt (411) der Nabenwelle (410) angebracht sind.

6. Vorrichtung zur Änderung der Geschwindigkeit von Fahrrädern nach Anspruch 1, wobei die Sperrklinken (421), (422) Folgendes umfassen:

einen Nasenabschnitt (421a), (422a), welcher im Inneren des Sperrklinkensteuerungsrings (430) positioniert ist; und
einen Verschlussabschnitt (421b), (422b), welcher mit den am Innenumfang des Sonnengetriebes (231), (232) ausgebildeten Sperrzähnen (231a), (232a) in Eingriff oder außer Eingriff gelangt.

7. Vorrichtung zur Änderung der Geschwindigkeit von Fahrrädern nach Anspruch 6, wobei die relativ weit von dem Sperrklinkensteuerungsring (430) entfernt liegenden Sperrklinken (421), (422) ferner einen verlängerten Abschnitt (422a) umfassen, welcher dünner als der Sperrklinkenkörper ist und **dadurch** verhindert, dass die Sperrklinke (422) mit anderen Elementen in Eingriff gelangt.

8. Vorrichtung zur Änderung der Geschwindigkeit von Fahrrädern nach Anspruch 1, wobei der vermittelnde Abschnitt (440) Folgendes umfasst:

eine auf einer Seite des Sperrklinkensteuerungsrings (430) ausgebildete Keilnut (433);
einen mit der Keilnut (433) eingreifenden verbindungsabschnitt (441) und eine in demselben ausgebildete Kopplungsnut (441a); und
einen in der Kopplungsnut (441a) angebrachten und mit einem in der Übersetzungsscheibe (450) ausgebildeten Keilabschnitt (453) eingreifenden Gabelring (442).

9. Vorrichtung zur Änderung der Geschwindigkeit von Fahrrädern nach Anspruch 1, wobei der Beabstandungsabschnitt (470) Folgendes umfasst:

einen Halteabschnitt (471), welcher ein Lager hält, das zwischen dem Träger (210) und dem Halteabschnitt (471) angebracht ist;
eine fest angebrachte Scheibe (472), welche an der Nabenwelle (410) befestigt ist; und
eine Vielzahl von Abstandsstiften (473), welche an der fest angebrachten Scheibe (472) befestigt sind und über eine in der Übersetzungsscheibe (450) ausgebildete bogenförmige Rille (454) in Kontakt mit dem Halteabschnitt (471) stehen.

10. Vorrichtung zur Änderung der Geschwindigkeit von Fahrrädern nach Anspruch 9, wobei der Halteabschnitt (471) drehbar ist und in demselben eine Durchgangsöffnung (471a) ausgebildet ist.

11. Vorrichtung zur Änderung der Geschwindigkeit von Fahrrädern nach Anspruch 1, umfassend mehr als zwei Sperrklinkensätze (421,) (422), wobei eine Vielzahl von Sperrklinkensteuerungsringen (430) jeweils zwischen den Sperrklinkensätzen (421), (422) angebracht ist.

12. Vorrichtung zur Änderung der Geschwindigkeit von Fahrrädern nach Anspruch 1, wobei das Kupplungsmittel (320) Folgendes umfasst:

einen Kupplungsring mit einer in demselben positionierten Gruppe von Stiften und
einen geneigten Abschnitt (241) an dem Außenumfang des Trägers (210) und des Hohlrades (240).

13. Vorrichtung zur Änderung der Geschwindigkeit von Fahrrädern nach Anspruch 1, wobei das Kupplungsmittel Folgendes umfasst:

eine in dem Raum zwischen den Planetengetrieben (220) angebrachte erste Sperrklinke (321); und
einen an dem Innenumfang des Nabengehäuses (320) ausgebildeten Hohlradabschnitt (322).

14. Vorrichtung zur Änderung der Geschwindigkeit von Fahrrädern nach Anspruch 1, wobei das Kupplungsmittel (320) Folgendes umfasst:

eine in dem Raum zwischen den Planetengetrieben (220) angebrachte zweite Sperrklinke (323);
ein mit den Planetengetrieben (220) und der zweiten Sperrklinke (323) eingreifendes Hohlrad (242), welches gleichzeitig auf der Außenseite der zweiten Sperrklinke (323) angebracht ist, und
eine zwischen dem Hohlrad (242) und dem Nabengehäuse (310) angebrachte dritte Sperrklinke (324).

15. Vorrichtung zur Änderung der Geschwindigkeit von Fahrrädern nach Anspruch 1, wobei der vermittelnde Abschnitt (440) Folgendes umfasst:

einen auf einer Seite des Sperrklinkensteuerungsrings befestigten Stift, welcher über eine zwischen dem Sperrklinkensteuerungsring (430) und der Übersetzungsscheibe (450) angebrachte Scheibe mit der Übersetzungsscheibe (450) verbunden ist.

## Revendications

1. Dispositif de changement de vitesse de bicyclettes, le dispositif comprenant :

un pignon entraîné (100) destiné à recevoir la force d'entraînement d'un pignon d'entraînement,

une partie de commande de la vitesse ; comprenant :

un dispositif porteur (210) fixé sur un côté du pignon entraîné (100), une pluralité d'engrenages planétaires (220) installés sur ledit dispositif porteur, chacun desdits engrenages planétaires possédant au moins une première partie de dent et une seconde partie de dent ;
au moins deux roues solaires (231), (232) chacune munie de dents triangulaires formées le long de leur circonférence intérieure, l'une desdites roues solaires venant en prise avec ladite première partie de dent de chacun desdits engrenages planétaires et une seconde roue desdites roues solaires venant en prise avec ladite seconde partie de dent sur chacun desdits engrenages planétaires ; et

une couronne de train planétaire (240) venant en prise avec les engrenages planétaires (220), une partie de production, comprenant:

un carter de moyeu (310) permettant de transférer la force d'entraînement vers une roue arrière d'une bicyclette au moyen du dispositif porteur (210) et de la couronne de train planétaire (240) ; et

des moyens d'embrayage (320) montés entre le dispositif porteur (210) et le carter de moyeu (310), et entre la couronne de train planétaire (240) et le carter de moyeu (310) afin de transmettre de manière sélective la force d'entraînement ; et une partie de commande du changement de vitesse , comprenant :

un axe de moyeu (410) possédant une partie de positionnement de cliquet (411) ;
au moins deux séries de cliquets (421), (422) agissant pour venir en prise avec les dents triangulaires (231a), (232a) des au moins deux roues solaires (231), (232),
une bague de commande du cliquet (430) s'étirant autour de l'axe de moyeu (410) agissant pour commander la position des aux moins deux séries de cliquets (421), (422) ;
un disque de transformation (450) ayant une rainure le long de sa circonférence externe, et une partie d'accrochage sur ladite circonférence externe, le disque de transformation agissant pour transformer la position de la bague de commande du cliquet (430) via une partie médiatrice ;
un ressort (460) pour ramener le disque de transformation dans sa position initiale ; et
une partie d'espacement (470) permettant au disque de transformation de pivoter librement par rapport au carter de moyeu.

2. Dispositif de changement de vitesse de bicyclettes selon la revendication 1, dans lequel des rainures sont formées symétriquement par rapport au point central sur la surface intérieure de la bague de commande de cliquet (430).

3. Dispositif de changement de vitesse de bicyclettes selon la revendication 2, dans lequel les rainures de la bague de commande de cliquet (430) ne sont pas formées avec le même intervalle angulaire par rapport au point central.

4. Dispositif de changement de vitesse de bicyclettes selon la revendication 2, dans lequel les rainures de la bague de commande cliquet (430) sont constituées alternativement d'un couple de rainures inclinées et d'un couple de rainure angulaires.

5. Dispositif de changement de vitesse de bicyclettes selon la revendication 1, dans lequel les cliquets (421), 422) sont installés dans la partie de positionnement de cliquets (411) de l'axe de moyeu (410) avec le même intervalle angulaire.

6. Dispositif de changement de vitesse de bicyclettes selon la revendication 1, dans lequel les cliquets (421), (422) comprennent :

une partie de flèche (421a), (422a) qui est positionnée à l'intérieur de la bague de commande de cliquet (430) ; et
une partie d'arrêt (421b), (422b) qui vient en prise avec ou libère les dents triangulaires (231a), (232a) formées le long de la circonférence interne de la roue solaire (231), (232).

7. Dispositif de changement de vitesse de bicyclettes selon la revendication 6, dans lequel les cliquets (421), (422) qui sont positionnés relativement loin de la bague de commande de cliquet (430) comprennent en outre une partie étirée (422a) qui est plus fine que le corps de cliquet, empêchant ainsi le cliquet (422) de venir en prise avec d'autres éléments.

8. Dispositif de changement de vitesse de bicyclettes selon la revendication 1, dans lequel la partie médiatrice (440) comprend :

une rainure cannelée (433) formée sur un côté de la bague de commande de cliquet (430) ;
une partie de raccord (441) venant en prise avec la rainure cannelée (433) et une rainure de couplage (441a) formée l'intérieur ; et
une bague de fourchette (442) qui est installée dans la rainure de couplage (441a) et est en prise avec une partie cannelée (453) formée dans le disque de transformation (450).

9. Dispositif de changement de vitesse de bicyclettes selon la revendication 1, dans lequel la partie d'espacement (470) comprend :

une partie de support (471) soutenant un coussinet, qui est monté entre le dispositif porteur (210) et la partie de support (471) ;
un disque fixe (472) qui est fixé sur l'axe de moyeu (410) ; et
une pluralité de tiges d'espacement (473) fixées sur le disque fixe (472) et étant en contact avec la partie de support (471) par une rainure arquée (454) formée dans le disque de transformation (450).

**10.** Dispositif de changement de vitesse de bicyclettes selon la revendication 9, dans lequel la partie de support (471) peut pivoter et un trou traversant (471a) est formé à l'intérieur.

**11.** Dispositif de changement de vitesse de bicyclettes selon la revendication 1, comprenant plus de deux séries de cliquets (421), (422) dotés d'une pluralité de bagues de commande de cliquet (430) installées entre chaque série de cliquets (421), (422).

**12.** Dispositif de changement de vitesse de bicyclettes selon la revendication 1, dans lequel les moyens d'engrenage (320) comprennent:

une bague d'engrenage possédant un groupe de tiges positionnées à l'intérieur ; et
une partie inclinée (241) située au niveau de la circonférence extérieure du dispositif porteur (210) et de la couronne de train planétaire (240).

**13.** Dispositif de changement de vitesse de bicyclettes selon la revendication 1, dans lequel les moyens d'embrayage comprennent :

un premier cliquet (321) installé dans l'espace entre les engrenages planétaires (220) ; et
une partie de couronne de train planétaire (322) formée sur la circonférence interne du carter de moyeu (320).

**14.** Dispositif de changement de vitesse de bicyclettes selon la revendication 1, dans lequel les moyens d'embrayage (320) comprennent :

un second cliquet (323) installé dans l'espace entre les engrenages planétaires (220) ;
une couronne de train planétaire (242) venant en prise avec les engrenages planétaires (220) et le deuxième cliquet (323) installés simultanément en dehors du deuxième cliquet (323) ; et
un troisième cliquet (324) installé entre la couronne de train planétaire (242) et le carter de moyeu (310).

**15.** Dispositif de changement de vitesse de bicyclettes selon la revendication 1, dans lequel la partie médiatrice (440) comprend :

une tige fixée sur un côté de la bague de commande de cliquet, ladite tige étant raccordée au disque de transformation (450) par un disque installé entre la bague de commande de cliquet (430) et le disque de transformation (450).

# FIG. 1
## PRIOR ART

# FIG. 2A
# PRIOR ART

# FIG. 2B
# PRIOR ART

# FIG. 2C
## PRIOR ART

# FIG. 3

## FIG. 4

# FIG. 5

# FIG. 6

FIG. 7

# FIG. 8

## FIG. 9A

## FIG. 9B

FIG. 9C

# FIG. 10

# FIG. 11

**EP 1 240 074 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7010069 A